# EUROPÄISCHE PATENTSCHRIFT

(11) **EP 3 236 076 B1**
(45) Veröffentlichungstag und Bekanntmachung des Hinweises auf die Patenterteilung: **19.05.2021**
(21) Anmeldenummer: 17152818.5
(22) Anmeldetag: 24.01.2017
(51) Int. Cl.: F04D 25/04, F01D 15/00, F04D 25/16, F02C 6/02, F02C 6/12, F02C 7/36

(54) **TURBOMASCHINENANORDNUNG**
TURBOMACHINE ASSEMBLY
SYSTÈME DE TURBOMACHINE

(30) Priorität: 20.04.2016 DE 102016107341
(43) Veröffentlichungstag der Anmeldung: 25.10.2017
(73) Patentinhaber: ATLAS COPCO ENERGAS GMBH, 50999 Köln (DE)
(72) Erfinder: JANITSCHKE, Klaus, 53332 Bornheim-Waldorf (DE)
(74) Vertreter: Lorenz, Bernd Ingo Thaddeus

(56) Entgegenhaltungen:
- EP-A1- 2 604 862
- CH-A- 300 386
- DE-A1- 1 908 005
- GB-A- 696 191
- US-A- 5 402 631

## Beschreibung

Die Erfindung betrifft eine Turbomaschinenanordnung mit einem Gehäuse, einem ein Expanderlaufrad umfassenden Turboexpander, einem ein erstes Verdichterlaufrad umfassenden Turbokompressor und einer an dem Gehäuse drehbar gelagerten Welle. Die Welle verbindet das Expanderlaufrad mit dem Verdichterlaufrad.

Derartige Anordnungen sind aus dem Stand der Technik unter dem Stichwort Compander (Compressor-Expander) bekannt. Sie dienen dazu, bei der Entspannung eines Fluids (beispielsweise in Kühlkreisläufen) Druckenergie in dem Expander zurückzugewinnen und für den mit dem Expander gekoppelten Kompressor nutzbar zu machen. Da die vom Expander zurückgewonnene Energiemenge in der Regel nicht ausreicht, um den Kompressor zu betreiben, ist es notwendig, zusätzliche Energie aufzuwenden. Hierzu kann die den Expander mit dem Kompressor koppelnde Welle zusätzlich angetrieben sein. Dies hat jedoch den Nachteil, dass sowohl der Kompressor als auch der Expander nicht immer im optimalen Drehzahlbereich betrieben werden können.

Alternativ können auch der Kompressor und der Expander getrennt voneinander betrieben und nur indirekt miteinander gekoppelt werden. Hierdurch reduziert sich jedoch auch das Energierückgewinnungspotential aufgrund zusätzlicher Umwandlungsverluste. Außerdem führen zwei separate Anlagen zu einem erhöhten Wartungs- und Platzbedarf.

Vor diesem Hintergrund liegt der Erfindung die Aufgabe zugrunde, eine Companderanordnung mit geringem Platzbedarf und hoher Effizienz bereitzustellen.

Beispiele für Turbomaschinenanordnungen nach dem Stand der Technik sind in den Druckschriften CH 300 386 A, US 5 402 631 A, EP 2 604 862 A1, GB 696 191 A und DE 19 08 005 A1 offenbart.

Gegenstand der Erfindung und Lösung dieser Aufgabe ist eine Turbomaschinenanordnung nach Anspruch 1.

Erfindungsgemäß ist das erste Verdichterlaufrad ausschließlich durch das Expanderlaufrad über die Welle antreibbar. Ein zusätzlicher Antrieb ist nicht erforderlich, so dass das Expanderlaufrad in seinem optimalen Drehzahlbereich laufen kann. Zusätzlich ist nach der Erfindung an dem Gehäuse ein zweiter Turbokompressor mit einem zweiten Verdichterlaufrad vorgesehen. Der zweite Kompressor ist zu dem ersten Kompressor parallel oder in Reihe geschaltet. Das zweite Verdichterlaufrad ist über ein in dem Gehäuse aufgenommenes Getriebe und eine Antriebswelle antreibbar. Die erfindungsgemäße Turbomaschinenanordnung arbeitet besonders Energieeffizient, da das Expanderlaufrad in seinem optimalen Drehzahlbereich betrieben werden kann. Hierdurch kann das zu komprimierende Medium in dem ersten Turbokompressor unter Ausnutzung der zurückgewonnenen Energie vorverdichtet werden. Der zweite, von dem ersten Turbokompressor mechanisch entkoppelte Turbokompressor kann dann bedarfsgerecht den verbleibenden Druckunterschied bzw. Mengenstrom bereitstellen. Durch die Lagerung der Turbomaschinen und des den zweiten Turbokompressor antreibenden Getriebes an einem gemeinsamen Gehäuse kann eine besonders kompakte Bauform erreicht werden.

In einer bevorzugten Ausgestaltung ist an der Antriebswelle ein dritter Turbokompressor angeordnet, welcher ein drittes Verdichterlaufrad aufweist und mit dem ersten Turbokompressor und/oder dem zweiten Turbokompressor parallel oder in Reihe geschaltet ist. Hierdurch kann eine besonders kompakte mehrstufige Nachverdichtung bzw. Parallelverdichtung bereitgestellt werden.

In einer besonders bevorzugten Ausgestaltung sind die Welle und die Antriebswelle in dem Gehäuse an fluidgeschmierten Lagern gelagert, welche an ein gemeinsames Schmiermittelverteilsystem zur Bereitstellung eines Schmierstoffes angeschlossen sind. Durch die Kombination eines Companders und eines Getriebekompressors in einem Gehäuse ergeben sich hier Einsparmöglichkeiten, da die Schmiermittelzuführung nur einmal vorgesehen sein muss. Dies ermöglicht insgesamt eine kompaktere Bauform des Gesamtsystems. Auch kann beispielsweise bei einem Compander mit einer freidrehenden Welle ein ausreichender Schmiermittelfluss auch im Stillstand bereitgestellt werden, wenn das Schmiermittelverteilsystem an das Getriebe des Getriebeverdichters oder seine Hilfsaggregate direkt gekoppelt ist. Umgekehrt ist es ebenso denkbar, die in der Expansionsturbine zurückgewonnene Energie als Hilfsenergie zur Aufrechterhaltung des Schmiermittelkreislaufes zu nutzen, wenn der zu expandierende Fluidstrom kontinuierlich anfällt - wie dies bei Kühlanwendungen der Fall ist. Hierzu kann eine Schmiermittelpumpe des Schmiermittelverteilsystems direkt oder indirekt an die Welle gekoppelt werden.

Besonders bevorzugt sind an das Schmiermittelverteilsystem auch Vorrichtungen zur Beaufschlagung des Getriebes mit dem Schmiermittel vorgesehen. Dabei kann der Innenraum des Gehäuses bevorzugt als Sammelraum für überschüssiges Schmiermittel, welches aus den Lagern austritt oder vom Getriebe abfällt, genutzt werden. Das Schmiermittel kann bevorzugt im Kreislauf geführt werden, wobei es zweckmäßigerweise auch eine Temperierungsfunktion (insbesondere zur Kühlung) wahrnehmen kann.

Zweckmäßigerweise weist das Getriebe ein mit ein auf der Antriebswelle angeordneten Ritzel kämmendes Großrad auf. Das Großrad weist zweckmäßigerweise einen größeren Durchmesser als das Ritzel auf und stellt hierdurch eine Übersetzung seines Antriebs auf die Drehzahl der Antriebswelle her. Das Großrad ist bevorzugt massiv ausgebaut und kann somit auch als Schwungrad zur Stabilisierung der Drehzahl des durch das Getriebe angetriebenen Kompressors dienen.

In einer bevorzugten Ausgestaltung liegen die Drehachse der Welle, die Drehachse der Antriebswelle und die Drehachse des Großrades in einer Ebene. Dies erleichtert die konstruktive Auslegung sowie den Aufbau und Wartung der Turbomaschinenanordnung.

In einer besonders bevorzugten Ausgestaltung bildet die Ebene, in der die Drehachsen liegen, gleichzeitig eine Trennebene des Gehäuses. Hierbei ist das Gehäuse zumindest zweiteilig ausgebildet, wobei zumindest ein Gehäuseteil von zumindest einem anderen Gehäuseteil in der Art entfernt werden kann, dass die Welle, die Antriebswelle und das Großrad separat oder gemeinsam entnommen werden können. Dies erleichtert die Erstmontage der Turbomaschinenanordnung sowie nachfolgend Wartungs- und Instandsetzungsarbeiten, bei denen die rotierenden Teile begutachtet und/oder ausgetauscht werden müssen.

In einer besonders bevorzugten Ausgestaltung ist die Drehachse des Großrades mittig zwischen der Drehachse der Welle und der Drehachse der Antriebsachse (in Draufsicht senkrecht zu einer durch die parallelen Drehachsen aufgespannten Ebene) angeordnet.

Vorzugsweise ist der Abstand zwischen der Drehachse des Großrades und der Drehachse der Welle und der Abstand zwischen der Drehachse des Großrades und der Drehachse der Antriebsachse gleich groß. Diese Anordnung zeichnet sich durch eine besonders kompakte Bauform aus. Hierbei reicht das Großrad auch besonders nah an die Welle heran, so dass es auch durch eine Drehbewegung Schmiermittel zu Schmier- und Kühlungszwecken auf die Welle transportieren kann. Weiterhin ist es möglich, bei Bedarf die angetriebene Welle durch Einfügen eines Ritzels an das Großrad zu koppeln.

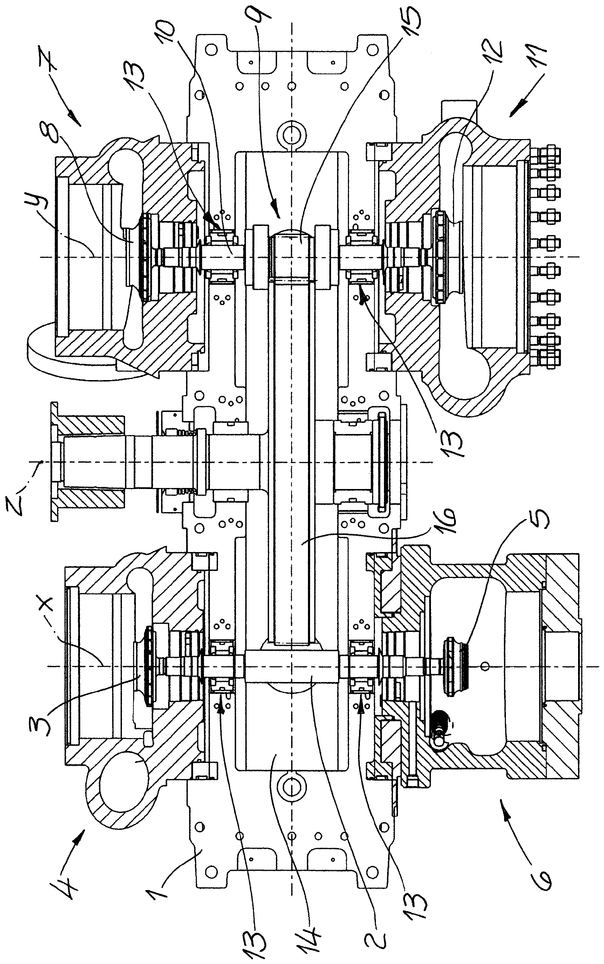

Die Erfindung wird nachfolgend anhand der lediglich ein Ausführungsbeispiel darstellenden einzigen Figur erläutert. Diese zeigt schematisch einen Horizontalschnitt durch eine erfindungsgemäße Turbomaschinenanordnung.

Diese weist ein Gehäuse 1 und eine an dem Gehäuse 1 drehbar gelagerte Welle 2 auf. Die Welle 2 verbindet ein Expanderlaufrad 3 eines Turboexpanders 4 mit einem ersten Verdichterlaufrad 5 eines ersten Turbokompressors 6. An der Welle 2 ist kein zusätzlicher Antrieb angeordnet, so dass das Kompressorlaufrad 5 ausschließlich durch das Expanderlaufrad 3 antreibbar ist. Erfindungsgemäß ist an dem Gehäuse 1 ein zweiter Turbokompressor 7 mit einem zweiten Kompressorlaufrad 8 angeordnet, der zu dem ersten Turbokompressor 6 parallel oder in Reihe geschaltet ist. Eine Parallelschaltung bedeutet dabei, dass die Ansaugbereiche und die Ausgangsbereiche beider Turbokompressoren jeweils in direkter Fluidkommunikation ohne zwischengeschaltete Fluidenergiemaschinen stehen. Eine Reihenschaltung ist so zu verstehen, dass der Ausgangsbereich eines der beiden Turbokompressoren mit dem Ansaugbereich des anderen Turbokompressors in Fluidverbindung steht. Das zweite Kompressorlaufrad 8 ist über ein in dem Gehäuse 1 aufgenommenes Getriebe 9 und eine das Getriebe 9 mit dem zweiten Kompressorlaufrad 8 verbindenden Antriebswelle 10 antreibbar.

In dem Ausführungsbeispiel ist an dem Gehäuse 1 ferner ein dritter Turbokompressor 11 mit einem dritten Kompressorlaufrad 12 angeordnet, der zu dem ersten Turbokompressor 6 und/oder dem zweiten Turbokompressor 7 parallel oder seriell angeordnet ist. Das dritte Kompressorlaufrad 12 ist mit der Antriebswelle 10 verbunden.

Die Welle 2 und die Antriebswelle 10 sind an fluidgeschmierten Lagern 13 an dem Gehäuse 1 drehbar gelagert. Die Lager 13 sind an ein gemeinsames, nicht dargestelltes Schmiermittelverteilsystem zur Bereitstellung eines Schmierstoffes angeschlossen. Die Lager 13 sind so ausgebildet, dass überschüssiges Schmiermittel in einen Innenraum 14 des Gehäuses austritt, wo dieses im Schmiermittelverteilsystem erneut zugeführt werden kann.

Das Getriebe 9 weist ein auf der Antriebswelle angeordnetes Ritzel 15 sowie ein mit dem Ritzel kämmendes Großrad 16 auf. Dabei liegen die Drehachse x der Welle 2, die Drehachse y der Antriebswelle 10 und die Drehachse z des Großrades 16 in einer Ebene, welche die Schnittebene der Figur bildet. Diese Ebene ist gleichzeitig eine Trennungsebene des Gehäuses 1, von dem in der Ansicht lediglich ein Unterteil sichtbar ist. Die Drehachse z des Großrades liegt mittig zwischen den Drehachsen x und y der Welle 2 und der Antriebswelle. Das Expanderlaufrad 3 sowie die Kompressorlaufräder 5, 8, 12 sind jeweils fliegend an den Enden der Welle 2 und der Antriebswelle 10 angeordnet.

Die Gehäuse des Expanders 4 und der Kompressoren 6, 7, 11 sind als separate Teile ausgebildet, können jedoch in alternativen Ausgestaltungen auch einstückig an das Gehäuse 1 angeformt sein. Zwischen den Lagern 13 und den Laufrädern 3, 5, 8, 12 sind Dichtungseinrichtungen zur Verhinderung eines Durchtritts von Schmiermittel aus dem Gehäuse 1 bzw. Eintritt von Arbeitsmedium in das Gehäuse 1 in Form von Gasdichtungen (Dry Face Seal) angeordnet. Alternativ können auch andere Dichtungstypen, wie Labyrinthdichtungen oder Schwimmringdichtungen vorgesehen sein.

## Patentansprüche

1. Turbomaschinenanordnung mit einem Gehäuse (1), einem ein Expanderlaufrad (3) umfassenden Turboexpander (4), einem ein erstes Verdichterlaufrad (5) umfassenden ersten Turbokompressor (6) und einer an dem Gehäuse (1) drehbar gelagerten Welle (2), die das Expanderlaufrad (3) mit dem Verdichterlaufrad (5) verbindet, wobei der erste Turbokompressor (6) ausschließlich durch den Turboexpander (4) antreibbar ist, **dadurch gekennzeichnet, dass** an dem Gehäuse (1) ein zweiter Turbokompressor (7) mit einem zweiten Kompressorlaufrad (8) angeordnet ist, welcher zu dem ersten Turbokompressor (6) parallel oder in Reihe geschaltet ist, dass der zweite Turbokompressor von dem ersten Turbokompressor mechanisch entkoppelt ist und dass das zweite Kompressorlaufrad (8) über ein in dem Gehäuse (1) aufgenommenes Getriebe (9) und eine das Getriebe (9) mit dem zweiten Kompressorlaufrad (8) verbindenden Antriebswelle (10) antreibbar ist.

2. Turbomaschinenanordnung nach Anspruch 1, **dadurch gekennzeichnet, dass** an dem Gehäuse (1) ein dritter Turbokompressor (11) mit einem dritten Kompressorlaufrad (12) angeordnet ist, der zu dem ersten Turbokompressor (6) und/oder dem zweiten Turbokompressor (7) parallel oder seriell angeordnet ist, und dass das dritte Kompressorlaufrad (12) mit der Antriebswelle (10) verbunden ist.

3. Turbomaschinenanordnung nach Anspruch 1 oder 2, **dadurch gekennzeichnet, dass** die Welle (2) und die Antriebswelle (10) an fluidgeschmierten Lagern (13) an dem Gehäuse (1) drehbar gelagert sind, welche an ein gemeinsames Schmiermittelverteilsystem zur Bereitstellung eines Schmierstoffes angeschlossen sind.

4. Turbomaschinenanordnung nach Anspruch 3, **dadurch gekennzeichnet, dass** an das Schmiermittelverteilungssystem auch Mittel zur Beaufschlagung des Getriebes (9) mit dem Schmiermittel angeschlossen sind.

5. Turbomaschinenanordnung nach einem der Ansprüche 1 bis 4, **dadurch gekennzeichnet, dass** das Getriebe (9) ein auf der Antriebswelle (10) angeordnetes Ritzel (15) sowie ein mit dem Ritzel (15) kämmendes Großrad (16) aufweist.

6. Turbomaschinenanordnung nach Anspruch 5, **dadurch gekennzeichnet, dass** die Drehachse (x) der Welle (2), die Drehachse (y) der Antriebswelle (10) und die Drehachse (z) des Großrades (16) in einer Ebene liegen.

7. Turbomaschinenanordnung nach Anspruch 6, **dadurch gekennzeichnet, dass** die Drehachse (x) der Welle (2), die Drehachse (y) der Antriebswelle (10) und die Drehachse (z) des Großrades (16) in einer Trennungsebene des Gehäuses (1) liegen.

8. Turbomaschinenanordnung nach einem der Ansprüche 5 bis 7, **dadurch gekennzeichnet, dass** die Drehachse (z) des Großrades (16) mittig zwischen der Welle (2) und der Antriebswelle (10) angeordnet ist.

9. Turbomaschinenanordnung nach einem der Ansprüche 1 bis 8, **dadurch gekennzeichnet, dass** der Turboexpander (4) und/oder zumindest einer der Turbokompressoren (6, 7, 11) als radiale Turbomaschine mit einem an einem Wellenende der Welle (2) bzw. der Antriebswelle (10) angeordneten Laufrad (3, 5, 8, 12) ausgebildet ist.

## Claims

1. Turbo engine assembly with a housing (1), a turbo expander (4) comprising an expander impeller (3), a first turbo compressor (6) comprising a first compressor impeller (5) and a shaft (2) rotatably mounted on the housing (1), which connects the expander impeller (3) to the compressor impeller (5), wherein the first turbo compressor (6) can be exclusively propelled by the turbo expander (4), **characterized in that** a second turbo compressor (7) is arranged on the housing (1) with a second compressor impeller (8), which is connected to the first turbo compressor (6) in parallel or in series, that the second turbo compressor is mechanically decoupled from the first turbo compressor, and that the second compressor impeller (8) can be propelled by means of a gearbox (9) accommodated in the housing (1) and a drive shaft (10) connecting the gearbox (9) to the second compressor impeller (8).

2. Turbo engine assembly according to Claim 1, **characterized in that** a third turbo compressor (11) is arranged on the housing (1) with a third compressor impeller (12), which is arranged parallelly or serially to the first turbo compressor (6) and/or the second turbo compressor (7), and that the third compressor impeller (12) is connected to the drive shaft (10).

3. Turbo engine assembly according to Claim 1 or 2, **characterized in that** the shaft (2) and the drive shaft (10) are rotatably mounted on fluid-lubricated bearings (13) on the housing (1), which are connected to a common lubricant distribution system for the provision of a lubricant.

4. Turbo engine assembly according to Claim 3, **characterized in that** means to impinge the gearbox (9) with the lubricant are also connected to the lubricant distribution system.

5. Turbo engine assembly according to any one of Claims 1 to 4, **characterized in that** the gearbox (9) comprises a pinion (15) arranged on the drive shaft (10) and a large gear (16) combing with the pinion (15).

6. Turbo engine assembly according to Claim 5, **characterized in that** the axis of rotation (x) of the shaft (2), the axis of rotation (y) of the drive shaft (10) and the axis of rotation (z) of the large gear (16) are on one plane.

7. Turbo engine assembly according to Claim 6, **characterized in that** the axis of rotation (x) of the shaft (2), the axis of rotation (y) of the drive shaft (10) and the axis of rotation (z) of the large gear (16) lie on a separation plane of the housing (1).

8. Turbo engine assembly according to any one of Claims 5 to 7, **characterized in that** the axis of rotation (z) of the large gear (16) is arranged in the middle between the shaft (2) and the drive shaft (10).

9. Turbo engine assembly according to any one of Claims 1 to 8, **characterized in that** the turbo expander (4) and/or at least one of the turbo compressors (6, 7, 11) is designed as a radial turbo engine with an impeller (3, 5, 8, 12) arranged on a shaft end of the shaft (2) or of the drive shaft (10).

## Revendications

1. Agencement de turbomachine comportant un carter (1), un turbo-détendeur (4) comprenant une roue de détente (3), un premier turbocompresseur (6) comprenant une première roue de compresseur (5) et un arbre (2) monté rotativement sur le carter (1), que la roue de détente (3) relie à la roue de compresseur (5), dans lequel le premier turbocompresseur (6) est entraîné exclusivement par le turbo-détenteur (4), **caractérisé en ce qu'**un deuxième turbocompresseur (7) est disposé sur le carter (1) avec une deuxième roue de compresseur (8), qui est raccordé au premier turbocompresseur (6) en parallèle ou en série, que le deuxième turbocompresseur est découplé mécaniquement du premier turbocompresseur et que la deuxième roue de compresseur (8) peut être entraînée via un engrenage (9) logé dans le carter (1) et un arbre d'entraînement (10) reliant l'engrenage (9) à la deuxième roue de compresseur (8).

2. Agencement de turbomachine selon la revendication 1, **caractérisé en ce qu'**un troisième turbocompresseur (11) avec une troisième roue de compresseur (12) est disposé sur le carter (1), qui est relié au premier turbocompresseur (6) et/ou le deuxième turbocompresseur (7) est disposé en parallèle ou en série, et **en ce que** la troisième roue de compresseur (12) est reliée à l'arbre d'entraînement (10).

3. Agencement de turbomachine selon la revendication 1 ou 2, **caractérisé en ce que** l'arbre (2) et l'arbre d'entraînement (10) sont montés rotativement sur des paliers lubrifiés par fluide (13) sur le carter (1), qui sont raccordés à un système commun de distribution de lubrifiant pour fournir un lubrifiant.

4. Agencement de turbomachine selon la revendication 3, **caractérisé en ce que** des moyens d'application du lubrifiant sur la transmission (9) sont également reliés au système de distribution de lubrifiant.

5. Agencement de turbomachine selon une des revendications 1 à 4, **caractérisé en ce que** la transmission (9) présente un pignon (15) disposé sur l'arbre d'entraînement (10) et une grande roue (16) s'engrenant avec le pignon (15).

6. Agencement de turbomachine selon la revendication 5, **caractérisé en ce que** l'axe de rotation (x) de l'arbre (2), l'axe de rotation (y) de l'arbre d'entraînement (10) et l'axe de rotation (z) du la grande roue (16) se trouve dans un plan.

7. Agencement de turbomachine selon la revendication 6, **caractérisé en ce que** l'axe de rotation (x) de l'arbre (2), l'axe de rotation (y) de l'arbre d'entraînement (10) et l'axe de rotation (z) de la grande roue (16) se trouvent dans un plan de séparation du boîtier (1).

8. Agencement de turbomachine selon une des revendications 5 à 7, **caractérisé en ce que** l'axe de rotation (z) de la grande roue (16) est disposé au centre entre l'arbre (2) et l'arbre d'entraînement (10) .

9. Agencement de turbomachine selon l'une des revendications 1 à 8, **caractérisé en ce que** le turbo-détendeur (4) et/ou au moins un des turbocompresseurs (6, 7, 11) est conçu en tant que turbomachine radiale avec une roue (3, 5, 8, 12) à une extrémité d'arbre de l'arbre (2) ou de l'arbre d'entraînement (10).
